# EUROPEAN PATENT SPECIFICATION

(11) **EP 4 498 156 B1**
(45) Date of publication and mention of the grant of the patent: **09.12.2026**
(21) Application number: 23792080.6
(22) Date of filing: 07.04.2023
(51) Int. Cl.: G02F 1/161, G02F 1/155

(54) **ELECTROCHROMIC ELEMENT AND MANUFACTURING METHOD THEREFOR**
ELEKTROCHROMES ELEMENT UND HERSTELLUNGSVERFAHREN DAFÜR
ÉLÉMENT ÉLECTROCHROMIQUE ET SON PROCÉDÉ DE FABRICATION

(30) Priority: 20.04.2022 KR 20220049215
(43) Date of publication of application: 29.01.2025
(73) Proprietor: SKC Co., Ltd., Suwon-si, Gyeonggi-do 16338 (KR)
(72) Inventor: PARK, Jae Hyoung, Suwon-si Gyeonggi-do 16338 (KR); AHN, Byeong Uk, Suwon-si Gyeonggi-do 16338 (KR); LA, Yong Sang, Suwon-si Gyeonggi-do 16338 (KR); OH, Seung Bae, Suwon-si Gyeonggi-do 16338 (KR); LEE, Seong Hwan, Suwon-si Gyeonggi-do 16338 (KR)
(74) Representative: Isarpatent
(86) International application number: PCT/KR2023/004765
(87) International publication number: WO 2023/204501

(56) References cited:
- CN-A- 111 897 172
- JP-A- 2001 033 830
- KR-A- 20170 038 601
- KR-A- 20210 051 216
- KR-A- 20210 079 908
- US-A1- 2009 052 006

## Description

### [Technical Field]

Embodiments relate to an electrochromic element and a method of fabricating the same.

### [Background Art]

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways and patent-applied. As examples of related patent applications, there are Korea Patent Application Publication No. 10-2001-0087586, which discloses a film that changes from transparent to blue by depositing MoO₃, a reduced chromogenic oxide, on one of two ITO films (1A, 1B) formed by depositing a conductive Indium-tin oxide thin film on a glass film, and depositing WO₃, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage, and Korea Utility Model Publication No. 0184841 which discloses a film, whose color changes by electric energy, characterized by depositing indium-tinoxide on a 0.05 mm thick glass film, and then depositing opposite surfaces of the transition metal oxide film with WO₃, a reduced chromogenic material, and IrO₂, an oxidized chromogenic material, with a polymer solid electrolyte, α-PEO copolymer, therebetween, and then bonding the opposite surfaces with a high-frequency roller. Pertinent prior art is found in CN 111897172 A and in KR 10-2021-0079908 A.

### [Disclosure]

### [Technical Problem]

Therefore, the present invention has been made in view of the above problems, and it is one object of the present invention to provide an electrochromic element having improved durability and a method of fabricating the same.

### [Technical Solution]

In accordance with an aspect of the present invention, the above and other objects can be accomplished by the provision of an electrochromic as defined in appended claim 1.

In an embodiment, the first seal part may further include a first flattening part having a step difference from a top surface of the second substrate.

In an embodiment the first seal part may include a first body disposed in the first open region; and a first extension extending from the first body to the top surface of the second substrate.

In an embodiment, the first substrate may include a third side surface facing the first side surface, the second substrate may include a fourth side surface facing the third side surface, a second open region may be formed between the third side surface and the fourth side surface, and a second seal part disposed in the second open region and configured to cover portions of a lower surface of the second transparent electrode, a sixth side surface of the electrolyte layer, the third side surface and a lower surface of the first substrate may be further included.

In an embodiment, the second seal part may further include a second flattening part having a step difference from a lower surface of the first substrate.

In an embodiment, the second seal part may include a second body disposed in the second open region; and a second extension extending from the second body to a lower surface of the first substrate.

The electrochromic element according to an embodiment may further include a first barrier layer disposed on the first flattening part.

The electrochromic element according to an embodiment may further include a second barrier layer disposed under the second flattening part.

The electrochromic element according to an embodiment may further include a first bus bar connected electrically to the first transparent electrode layer, wherein the first seal part covers the first bus bar.

The electrochromic element according to an embodiment may further include a second bus bar electrically connected to the second transparent electrode layer, wherein the second seal part covers the second bus bar.

In accordance with another aspect of the present invention, provided is a method of fabricating an electrochromic element according to appended claim 11.

The method of fabricating an electrochromic element according to an embodiment may further include: removing a portion of the first substrate, a portion of the first transparent electrode, a portion of the first color-changing layer, a portion of the electrolyte layer and a portion of the second color-changing layer to form a second open region; disposing a second curable resin in the second open region; flattening the second curable resin; and curing the second curable resin.

### [Advantageous effects]

An electrochromic element according to an embodiment includes a first seal part disposed in a first open region from which a second substrate, a second transparent electrode and an electrolyte layer have been removed and a top surface of a first transparent electrode is open.

Accordingly, the first seal part can be attached to the top surface of the first transparent electrode while being disposed on a third side surface of the second substrate, a side surface of the second transparent electrode, a side surface of the second color-changing layer, a side surface of the electrolyte layer and a side surface of the first color-changing layer. In addition, the first seal part can be attached to the third side surface of the second substrate, the side surface of the second transparent electrode, the side surface of the second color-changing layer, the side surface of the electrolyte layer and the side surface of the first color-changing layer. In addition, the first seal part can be attached to a portion of a top surface of the second substrate.

Accordingly, the first seal part can be disposed over a wide area, and can be attached to the wide area. Accordingly, the first seal part may be firmly attached to portions of the top surface of the first transparent electrode, the third side surface of the second substrate, the side surface of the second transparent electrode, the side surface of the second color-changing layer, the side surface of the electrolyte layer, the side surface of the first color-changing layer and the top surface of the second substrate. In addition, the first seal part may be firmly brought into close contact with portions of the top surface of the first transparent electrode, the third side surface of the second substrate, the side surface of the second transparent electrode, the side surface of the second color-changing layer, the side surface of the electrolyte layer, the side surface of the first color-changing layer and the top surface of the second substrate.

Therefore, the first seal part can effectively suppress oxygen and moisture penetrating from the side.

Similarly, the second seal part can be disposed in a second open region from which the first substrate, the first transparent electrode and the electrolyte layer have been removed and a lower surface of the second transparent electrode is open.

In addition, the second seal part can be attached to a second side surface of the first substrate, a side surface of the first transparent electrode, a side surface of the first color-changing layer, a side surface of the electrolyte layer and a side surface of the second color-changing layer. In addition, the second seal part can also be attached to a portion of a lower surface of the first substrate.

Accordingly, the second seal part can efficiently suppress oxygen and moisture penetrating from the side.

Therefore, the electrochromic element according to another embodiment can block the inflow of oxygen and moisture from the outside and can effectively protect the first color-changing layer, the electrolyte layer and the second color-changing layer.

In addition, the first substrate and the second substrate can be flexible, and the electrochromic element according to another embodiment can be bent. Here, since the first seal part and the second seal part are strongly adhered to each side, the electrochromic element according to another embodiment can prevent the first seal part and the second seal part from being peeled off or gapped.

The electrochromic element according to an embodiment can have improved durability.

### [Description of Drawings]

FIG. 1 illustrates a plan view of an electrochromic element according to an example that is not claimed.
IG. 2 illustrates a sectional view taken along line A-A' of FIG. 1.
FIG. 3 illustrates an enlarged sectional view of a first extension.
FIG. 4 illustrates an enlarged sectional view of a second extension.
FIG. 5 illustrates a cross-sectional view of an electrochromic element according to another non-claimed example.
FIGS. 6 to 13 are sectional views illustrating a process of fabricating the electrochromic element according to a non-claimed example.
FIG. 14 illustrates a sectional view of an electrochromic element according to another non-claimed example.
FIG. 15 illustrates a sectional view of an electrochromic element according to an embodiment.

### [Best Mode]

In the description of embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically illustrated for conveniences and clarity of explanation, and the sizes of elements do not reflect their actual sizes completely.

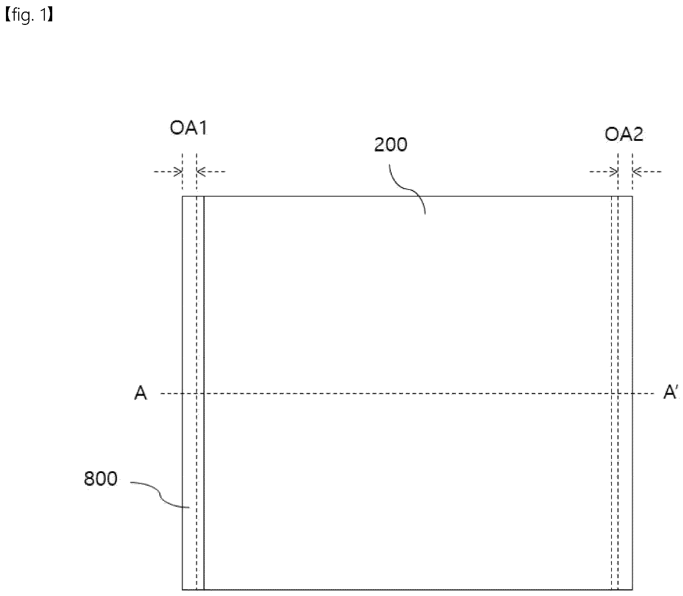

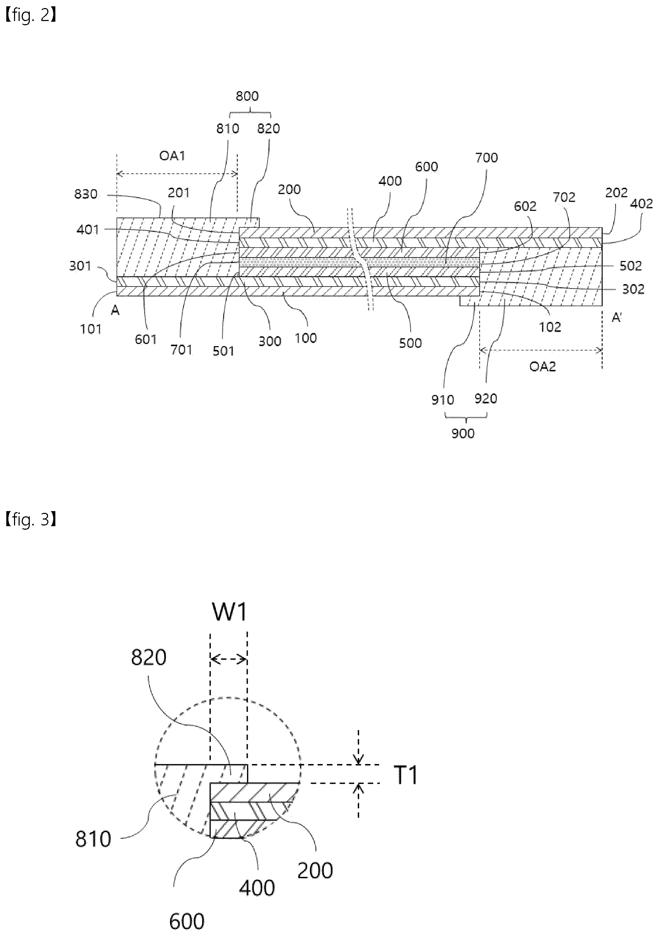

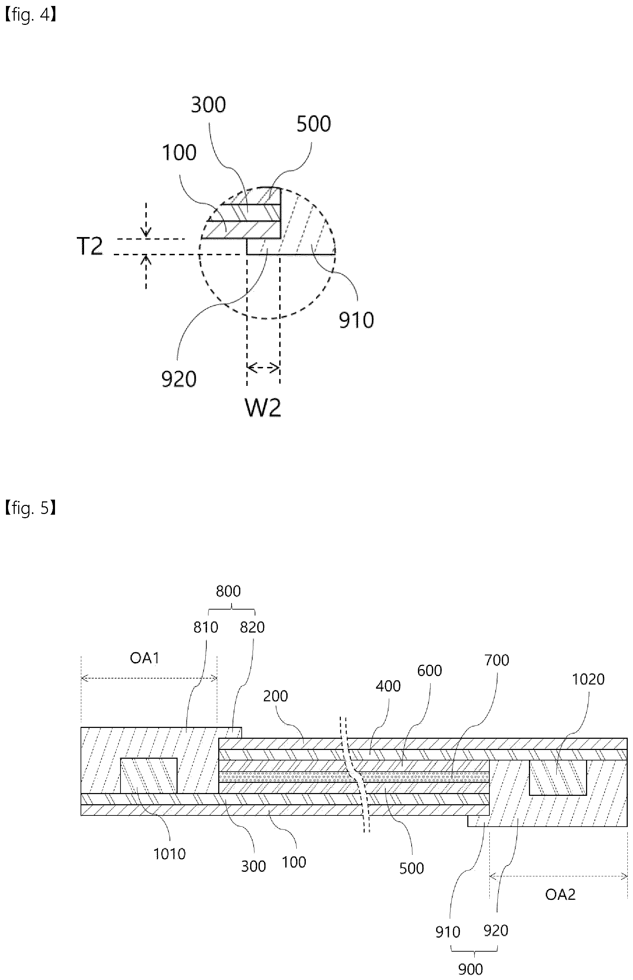

FIG. 1 illustrates a plan view of an electrochromic element according to an embodiment. FIG. 2 illustrates a sectional view taken along line A-A' of FIG. 1. FIG. 3 illustrates an enlarged sectional view of a first extension. FIG. 4 illustrates an enlarged sectional view of a second extension. FIG. 5 illustrates a cross-sectional view of an electrochromic element according to another embodiment.

Referring to FIGS. 1 to 4, the electrochromic element according to another embodiment includes a first substrate 100, a second substrate 200, a first transparent electrode 300, a second transparent electrode 400, a first color-changing layer 500, a second color-changing layer 600, an electrolyte layer 700, a first seal part 800 and a second seal part 900.

The first substrate 100 supports the first transparent electrode 300, the first color-changing layer 500, the second color-changing layer 600, the second transparent electrode 400 and the electrolyte layer 700 together with the second substrate 200.

In addition, the first transparent electrode 300, the first color-changing layer 500, the second color-changing layer 600, the second transparent electrode 400 and the electrolyte layer 700 are sandwiched between the first substrate 100 and the second substrate 200. The first substrate 100 protects the first transparent electrode 300, the first color-changing layer 500, the second color-changing layer 600, the second transparent electrode 400 and the electrolyte layer 700 from external physical impact and chemical impact together with the second substrate 200.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate and a polyolefin-based resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce the glass when applied to a window of a building or a vehicle.

The first substrate 100 may have a tensile strength of about 7 kgf/mm² to about 40 kgf/mm² in the longitudinal direction. The first substrate 100 may have a tensile strength of about 8 kgf/mm² to about 35 kgf/mm² in the longitudinal direction.

The first substrate 100 may have a tensile strength of about 7 kgf/mm² to about 40 kgf/mm² in the width direction. The first substrate 100 may have a tensile strength of about 8 kgf/mm² to about 35 kgf/mm² in the width direction.

The first substrate 100 may have a modulus of about 200 kgf/mm² to about 400 kgf/mm² in the longitudinal direction. The first substrate 100 may have a modulus of about 250 kgf/mm² to about 350 kgf/mm² in the longitudinal direction. The first substrate 100 may have a modulus of about 250 kgf/mm² to about 270 kgf/mm² in the longitudinal direction.

The first substrate 100 may have a modulus of about 200 kgf/mm² to about 400 kgf/mm² in the width direction. The first substrate 100 may have a modulus of about 250 kgf/mm² to about 350 kgf/mm² in the width direction. The first substrate 100 may have a modulus of about 250 kgf/mm² to about 270 kgf/mm² in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has the improved mechanical strength as described above, it can effectively protect the first transparent electrode 300, the second transparent electrode 400, the first color-changing layer 500, the second color-changing layer 600 and the electrolyte layer 700. In addition, since the first substrate 100 has the improved mechanical strength as described above, the mechanical strength of glass to be attached may be effectively reinforced.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be about 20% or less. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic element according to another embodiment may have an improved appearance.

The thickness of the first substrate 100 may be about 10 *µ*m to about 200 *µ*m. The thickness of the first substrate 100 may be about 23 *µ*m to about 150 *µ*m. The thickness of the first substrate 100 may be about 30 *µ*m to about 120 *µ*m.

The first substrate 100 may include an organic filler or an inorganic filler. The organic filler or the inorganic filler may function as an anti-blocking agent.

The average particle diameter of the filler may be about 0.1 *µ*m to about 5 *µ*m. The average particle diameter of the filler may be about 0.1 *µ*m to about 3 *µ*m. The average particle diameter of the filler may be about 0.1 *µ*m to about 1*µ*m.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

The second substrate 200 supports the first transparent electrode 300, the first color-changing layer 500, the second color-changing layer 600, the second transparent electrode 400 and the electrolyte layer 700 together with the first substrate 100.

In addition, the first transparent electrode 300, the first color-changing layer 500, the second color-changing layer 600, the second transparent electrode 400 and the electrolyte layer 700 are sandwiched between the second substrate 200 and the first substrate 100. The second substrate 200 may protect the first transparent electrode 300, the first color-changing layer 500, the second color-changing layer 600, the second transparent electrode 400 and the electrolyte layer 700 from external physical impact and chemical impact together with the first substrate 100.

The second substrate 200 may include a polymer resin. The second substrate 200 may include at least one selected from the group consisting of a polyester-based resin, a polyimide-based resin, a cyclic olefin polymer resin, a polyethersulfone, a polycarbonate and a polyolefin-based resin.

The second substrate 200 may include a polyester resin as a main component. The second substrate 200 may include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 kgf/mm² to about 40 kgf/mm² in the longitudinal direction. The second substrate 200 may have a tensile strength of about 8 kgf/mm² to about 35 kgf/mm² in the longitudinal direction.

The second substrate 200 may have a tensile strength of about 7 kgf/mm² to about 40 kgf/mm² in the width direction. The second substrate 200 may have a tensile strength of about 8 kgf/mm² to about 35 kgf/mm² in the width direction.

The second substrate 200 may have a modulus of about 200 kgf/mm² to about 400 kgf/mm² in the longitudinal direction. The second substrate 200 may have a modulus of about 250 kgf/mm² to about 350 kgf/mm² in the longitudinal direction. The second substrate 200 may have a modulus of about 250 kgf/mm² to about 270 kgf/mm² in the longitudinal direction.

The second substrate 200 may have a modulus of about 200 kgf/mm² to about 400 kgf/mm² in the width direction. The second substrate 200 may have a modulus of about 250 kgf/mm² to about 350 kgf/mm² in the width direction. The second substrate 200 may have a modulus of about 250 kgf/mm² to about 270 kgf/mm² in the width direction.

The second substrate 200 may have a fracture elongation of about 30% to about 150% in the longitudinal direction. The second substrate 200 may have a fracture elongation of about 30% to about 130% in the longitudinal direction. The second substrate 200 may have a fracture elongation of about 40% to about 120% in the longitudinal direction.

The second substrate 200 may have a fracture elongation of about 30% to about 150% in the longitudinal direction. The second substrate 200 may have a fracture elongation of about 30% to about 130% in the longitudinal direction. The second substrate 200 may have a fracture elongation of about 40% to about 120% in the longitudinal direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it can effectively protect the first transparent electrode 300, the second transparent electrode 400, the first color-changing layer 500, the second color-changing layer 600 and the electrolyte layer 700. In addition, since the second substrate 200 has the improved mechanical strength as described above, the mechanical strength of glass to be attached may be effectively reinforced.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. A total light transmittance of the second substrate 200 may be about 55% or more. The total light transmittance of the second substrate 200 may be about 70% or more. The total light transmittance of the second substrate 200 may be about 75% to about 99%. The total light transmittance of the second substrate 200 may be about 80% to about 99%.

A haze of the second substrate 200 may be about 20% or less. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 200 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

The thickness of the second substrate 200 may be about 10 *µ*m to about 200 *µ*m. The thickness of the second substrate 200 may be about 23 *µ*m to about 150 *µ*m. The thickness of the second substrate 200 may be about 30 *µ*m to about 120 *µ*m.

The second substrate 200 may include an organic filler or an inorganic filler. The organic filler or the inorganic filler may function as an anti-blocking agent.

The average particle diameter of the filler may be about 0.1 *µ*m to about 5 *µ*m. The average particle diameter of the filler may be about 0.1 *µ*m to about 3 *µ*m. The average particle diameter of the filler may be about 0.1 *µ*m to about 1*µ*m.

The filler may be at least one selected from the group consisting of silica particles, barium sulfate particles, alumina particles and titania particles.

The filler may be at least one selected from the group consisting of silica particles, barium sulfate particles, alumina particles and titania particles.

In addition, the filler may be included in the second substrate 200 in a content of about 0.01 wt% to about 3 wt% based on the total amount of the second substrate 200. The filler may be included in the second substrate 200 in a content of about 0.05 wt% to about 2 wt% based on the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

the first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq. The surface resistance of the first transparent electrode 300 may be about 1 Ω/sq to 40 Ω/sq. The surface resistance of the first transparent electrode 300 may be about 1 Ω/sq to 30 Ω/sq.

The thickness of the first transparent electrode 300 may be about 50 nm to about 50 *µ*m. The thickness of the first transparent electrode 300 may be about 100 nm to about 10 *µ*m. The thickness of the first transparent electrode 300 may be about 150 nm to about 5 *µ*m.

The first transparent electrode 300 is electrically connected to the first color-changing layer 500. In addition, the first transparent electrode 300 is electrically connected to the electrolyte layer 700 through the first color-changing layer 500.

The second transparent electrode 400 is disposed under the second substrate 200. The second transparent electrode 400 may be deposited on the second substrate 200. In addition, a hard coating layer may be further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of about 10% or less. The second transparent electrode 400 may have a haze of about 7% or less. The second transparent electrode 400 may have a haze of about 5% or less.

A surface resistance of the second transparent electrode 400 may be about 1 Ω/sq to about 60 Ω/sq. The surface resistance of the second transparent electrode 400 may be about 1 Ω/sq to about 40 Ω/sq. The surface resistance of the second transparent electrode 400 may be about 1 Ω/sq to about 30 Ω/sq.

The thickness of the second transparent electrode 400 may be about 50 nm to about 50 *µ*m. The thickness of the second transparent electrode 400 may be about 100 nm to about 10 *µ*m. The thickness of the second transparent electrode 400 may be about 150 nm to about 5 *µ*m.

The second transparent electrode 400 is electrically connected to the second color-changing layer 600. In addition, the second transparent electrode 400 is electrically connected to the electrolyte layer 700 through the second color-changing layer 600.

The first color-changing layer 500 is disposed on the first transparent electrode 300. The first color-changing layer 500 may be directly disposed on a top surface of the first transparent electrode 300. The first color-changing layer 500 may be electrically directly connected to the first transparent electrode 300.

The first color-changing layer 500 is electrically connected to the first transparent electrode 300. The first color-changing layer 500 may be directly connected to the first transparent electrode 300. In addition, the first color-changing layer 500 is electrically connected to the electrolyte layer 700. The first color-changing layer 500 may be electrically connected to the electrolyte layer 700.

The color of the first color-changing layer 500 may be changed when supplied with electrons. The first color-changing layer 500 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first color-changing layer 500 may include the first electrochromic material in the form of particles. The tungsten oxide, niobium pentoxide, vanadium pentoxide, titanium oxide and molybdenum oxide may be particles having a particle diameter of about 1nm to about 200 nm.

In addition, the first color-changing layer 500 may further include a binder. The binder may be an inorganic binder. The binder may include a silica gel. The binder may be formed by a silica sol containing tetramethoxysilane or methyltrimethoxysilane.

The second color-changing layer 600 is disposed under the second transparent electrode 400. The second color-changing layer 600 may be directly disposed on a lower surface of the second transparent electrode 400. The second color-changing layer 600 may be electrically directly connected to the second transparent electrode 400.

The second color-changing layer 600 is electrically connected to the second transparent electrode 400. The second color-changing layer 600 may be directly connected to the second transparent electrode 400. In addition, the second color-changing layer 600 is electrically connected to the electrolyte layer 700. The second color-changing layer 600 may be electrically connected to the electrolyte layer 700.

The color of the second color-changing layer 600 may be changed when losing electrons. The second color-changing layer 600 may include a second electrochromic material that is oxidized and color-changed while losing electrons. The second color-changing layer 600 may include at least one selected from the group consisting of Prussian blue, nickel oxide and iridium oxide.

The second color-changing layer 600 may include the second electrochromic material in the form of particles. The Prussian blue, nickel oxide and iridium oxide may be particles having a particle diameter of about 1nm to about 200 nm.

In addition, the second color-changing layer 600 may further include the binder.

The electrolyte layer 700 may be disposed on the first color-changing layer 500. In addition, the electrolyte layer 700 is disposed under the second color-changing layer 600. The electrolyte layer 700 may be disposed between the first color-changing layer 500 and the second color-changing layer 600.

The electrolyte layer 700 may include a solid polymer electrolyte containing metal ions, an inorganic hydrate, etc. The electrolyte layer 700 may include lithium ions (Li+), sodium ions (Na+), potassium ions (K+), etc.

Specifically, poly-AMPS, PEO/LiCF₃SO₃, etc. may be used as the solid polymer electrolyte, and Sb₂O₅ • 4H₂O, etc. may be used as the inorganic hydrate.

In addition, the electrolyte layer 700 is a configuration that provides electrolyte ions involved in an electrochromic reaction. The electrolyte ions may be, for example, monovalent cations such as H+, Li+, Na+, K+, Rb+ or Cs+.

The electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the electrolyte layer 700 is not particularly limited so long as it is a compound capable of providing monovalent cations, i.e., H+, Li+, Na+, K+, Rb+ or Cs+. For example, the electrolyte layer 700 may include a lithium salt compound such as LiClO₄, LiBF₄, LiAsF₆, LiPF₆, LiCl, LiBr, LiI, LiB₁₀Cl₁₀, LiCF₃SO₃, LiCF₃CO₂, LiAsF₆, LiSbF₆, LiAlCl₄, CH₃SO₃Li, CF ₃SO₃Li or (CF₃SO₂)₂NLi; or a sodium salt compound such as NaClO₄.

In one example, the electrolyte layer 700 may include a compound containing Cl or F element as an electrolyte salt. Specifically, the electrolyte layer 700 may include at least one electrolyte salt selected from among LiClO₄, LiBF₄, LiAsF₆, LiPF₆, LiCl, LiB₁₀Cl₁₀, LiCF₃SO₃, LiCF₃CO₂, LiAsF₆, LiSbF₆, LiAlCl₄, CF₃SO₃Li, (CF₃SO₂)₂NLi and NaClO₄.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

In another example, when the electrolyte layer 700 includes a gel polymer electrolyte, the electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), poly-ethylene succinate or poly-ethylene adipate. In one example, a mixture of two or more of the listed polymers or two or more copolymers may be used as a polymer electrolyte.

In addition, the electrolyte layer 700 may include a curable resin that can be cured by ultraviolet irradiation or heat. The curable resin may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocurable initiator and/or a heat-curable initiator.

A thickness of the electrolyte layer 700 may be about 10 *µ*m to about 200 *µ*m. The thickness of the electrolyte layer 700 may be about 50 *µ*m to about 150 *µ*m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm wavelength or 550 nm. The transmittance may be measured using a known haze meter (HM).

The electrochromic element according to another embodiment includes a first open region OA1. The first open region OA1 may be formed by removing portions of the second substrate 200, the second transparent electrode 400, the second color-changing layer 600, the electrolyte layer 700 and the first color-changing layer 500. The first open region OA1 may be formed by removing portions of the second substrate 200, the second transparent electrode 400, the second color-changing layer 600, the electrolyte layer 700 and the first color-changing layer 500 to expose a portion of a top surface of the first transparent electrode 300.

In addition, the first open region OA1 may be disposed at edge portions of the first substrate 100 and the first transparent electrode 300. The first open region OA1 may extend in one direction along the edge portions of the first substrate 100 and the first electrode.

The first open region OA1 may be disposed between a first side surface 101 of the first substrate 100 and a third side surface 201 of the second substrate 200. The first side surface 101 and the third side surface 201 may be disposed on different planes. In addition, the first side surface 101 and the third side surface 201 may extend in a direction parallel to each other.

The third side surface 201 may be disposed to be closer to the center of the electrochromic element according to another embodiment than the first side surface 101.

In addition, the first open region OA1 may be disposed between a seventh side surface 301 of the first transparent electrode 300 and the third side surface 201. In addition, the first open region OA1 may be disposed between the first side surface 101 and a ninth side surface 501 of the first color-changing layer 500. In addition, the first open region OA1 may be disposed between the first side surface 101 and a fifth side surface 701 of the electrolyte layer 700. In addition, the first open region OA1 may be disposed between the first side surface 101 and an eleventh side surface 601 of the second color-changing layer 600. The first open region OA1 may be disposed between the first side surface 101 and a thirteenth side surface 401 of the second transparent electrode 400.

In addition, the third side surface 201, the fifth side surface 701, the ninth side surface 501, the eleventh side surface 601 and the thirteenth side surface 401 may be disposed on the same plane.

The first open region OA1 may have a width of about 1 mm to about 20 mm. The first open region OA1 may have a width of about 2 mm to about 10 mm.

The electrochromic element according to another embodiment includes a second open region OA2. The second open region OA2 may be formed by removing a portion of the first substrate 100, a portion of the first transparent electrode 300, a portion of the first color-changing layer 500, a portion of the electrolyte layer 700 and a portion of the second color-changing layer 600. The second open region OA2 may be formed by removing a portion of the first substrate 100, a portion of the first transparent electrode 300, a portion of the first color-changing layer 500, a portion of the electrolyte layer 700 and a portion of the second color-changing layer 600 to expose a portion of a lower surface of the second transparent electrode 400.

In addition, the second open region OA2 may be disposed at edge portions of the second substrate 200 and the second transparent electrode 400. The second open region OA2 may extend in one direction along the edge portions of the second substrate 200 and the second transparent electrode 400. The second open region OA2 may extend parallel to the first open region OA1.

The second open region OA2 may be disposed between a second side surface 102 of the first substrate 100 and a fourth side surface 202 of the second substrate 200. The second side surface 102 and the fourth side surface 202 may be disposed on different planes. In addition, the second side surface 102 and the fourth side surface 202 may extend in a direction parallel to each other.

The second side surface 102 may be disposed closer to the center of the electrochromic element according to another embodiment than the fourth side surface 202.

In addition, the second open region OA2 may be disposed between a fourteenth side surface 402 of the second transparent electrode 400 and the second side surface 102. In addition, the second open region OA2 may be disposed between the fourth side surface 202 and a tenth side surface 502 of the first color-changing layer 500. In addition, the second open region OA2 may be disposed between the fourth side surface 202 and a sixth side surface 702 of the electrolyte layer 700. In addition, the second open region OA2 may be disposed between the fourth side surface 202 and a twelfth side surface 602 of the second color-changing layer 600. The second open region OA2 may be disposed between the fourth side surface 202 and an eighth side surface 302 of the first transparent electrode 300.

In addition, the second side surface 102, the sixth side surface 702, the eighth side surface 302, the tenth side surface 502 and the twelfth side surface 602 may be disposed on the same plane.

The second open region OA2 may have a width of about 1 mm to about 20 mm. The second open region OA2 may have a width of about 2 mm to about 10 mm.

The first seal part 800 is disposed in the first open region OA1. The first seal part 800 is disposed on the exposed top surface of the first transparent electrode 300. The first seal part 800 covers the exposed top surface of the first transparent electrode 300. The first seal part 800 may be directly disposed on the exposed top surface of the first transparent electrode 300. The first seal part 800 may be in close contact with the exposed top surface of the first transparent electrode 300. The first seal part 800 may be attached to the exposed top surface of the first transparent electrode 300.

The first seal part 800 covers the third side surface 201, the fifth side surface 701, the seventh side surface 301, the ninth side surface 501, the eleventh side surface 601 and the thirteenth side surface 401. The first seal part 800 is disposed on the third side surface 201, the fifth side surface 701, the seventh side surface 301, the ninth side surface 501, the eleventh side surface 601 and the thirteenth side surface 401. The first seal part 800 may be directly disposed on the third side surface 201, the fifth side surface 701, the seventh side surface 301, the ninth side surface 501, the eleventh side surface 601 and the thirteenth side surface 401. The first seal part 800 may be in close contact with the third side surface 201, the fifth side surface 701, the seventh side surface 301, the ninth side surface 501, the eleventh side surface 601 and the thirteenth side surface 401. The first seal part 800 may be attached to the third side surface 201, the fifth side surface 701, the seventh side surface 301, the ninth side surface 501, the eleventh side surface 601 and the thirteenth side surface 401.

The first seal part 800 may cover a portion of a top surface of the second substrate 200. The first seal part 800 may be disposed on the portion of the top surface of the second substrate 200. The first seal part 800 may be in close contact with the portion of the top surface of the second substrate 200. The first seal part 800 may be attached to the portion of the top surface of the second substrate 200.

The first seal part 800 includes a first body 810 and a first extension 820.

The first body 810 is disposed on the first open region OA1. The first body 810 covers the exposed top surface of the first transparent electrode 300, the third side surface 201, the fifth side surface 701, the seventh side surface 301, the ninth side surface 501, the eleventh side surface 601 and the thirteenth side surface 401.

The first extension 820 extends from the first body 810 to a top surface of the second substrate 200. The first extension 820 covers the portion of the top surface of the second substrate 200. The first extension 820 is in close contact with the portion of the top surface of the second substrate 200. The first extension 820 is attached to the portion of the top surface of the second substrate 200.

A thickness T1 of the first extension 820 may be about 10 *µ*m to about 1000 *µ*m The thickness T1 of the first extension 820 may be about 50 *µ*m to about 500 *µ*m. The thickness T1 of the first extension 820 may be about 50 *µ*m to about 300 *µ*m.

In addition, a width W1 of the first extension 820 may be about 1 mm to about 20 mm. The width W1 of the first extension 820 may be about 3 mm to about 10 mm.

Since the first extension 820 has the thickness and width as described above, the electrochromic element according to another embodiment may effectively protect the electrolyte layer 700, the first color-changing layer 500, the second color-changing layer 600 and the second transparent electrode 400.

In addition, the first seal part 800 may further include a first flattening part 830.

The first flattening part 830 may have a step difference from the top surface of the second substrate 200. The first flattening part 830 may extend in a direction corresponding to a direction in which the top surface of the second substrate 200 extends. That is, the first flattening part 830 may have a step difference from the top surface of the second substrate 200 while being substantially parallel to the top surface of the second substrate 200.

Since the first seal part 800 has the first flattening part 830, a top surface of the first seal part 800 may be flat overall. Accordingly, the electrochromic element according to another embodiment may have a minimized thickness deviation in the edge portions. Accordingly, the electrochromic element according to another embodiment may minimize defects due to a thickness deviation.

The second seal part 900 is disposed in the second open region OA2. The second seal part 900 is disposed on the lower surface of the exposed second transparent electrode 400. The second seal part 900 covers the lower surface of the exposed second transparent electrode 400. The second seal part 900 may be directly disposed on the lower surface of the exposed second transparent electrode 400. The second seal part 900 may be in close contact with the lower surface of the exposed second transparent electrode 400. The second seal part 900 may be attached to the lower surface of the exposed second transparent electrode 400.

The second seal part 900 covers the second side surface 102, the fourth side surface 202, the sixth side surface 702, the eighth side surface 302, the tenth side surface 502 and the twelfth side surface 602. The second seal part 900 is disposed on the second side surface 102, the fourth side surface 202, the sixth side surface 702, the eighth side surface 302, the tenth side surface 502 and the twelfth side surface 602. The second seal part 900 may be directly disposed on the second side surface 102, the fourth side surface 202, the sixth side surface 702, the eighth side surface 302, the tenth side surface 502 and the twelfth side surface 602. The second seal part 900 may be in close contact with the second side surface 102, the fourth side surface 202, the sixth side surface 702, the eighth side surface 302, the tenth side surface 502 and the twelfth side surface 602. The second seal part 900 may be attached to the second side surface 102, the fourth side surface 202, the sixth side surface 702, the eighth side surface 302, the tenth side surface 502 and the twelfth side surface 602.

The second seal part 900 may cover a portion of a lower surface of the first substrate 100. The second seal part 900 may be disposed on the portion of the lower surface of the first substrate 100. The second seal part 900 may be in close contact with the portion of the lower surface of the first substrate 100. The second seal part 900 may be attached to the portion of the lower surface of the first substrate 100.

The second seal part 900 includes a second body 910 and a second extension 920.

The second body 910 is disposed in the second open region OA2. The second body 910 covers the lower surface of the exposed second transparent electrode 400, the second side surface 102, the fourth side surface 202, the sixth side surface 702, the eighth side surface 302, the tenth side surface 502 and the twelfth side surface 602.

The second extension 920 extends from the second body 910 to the lower surface of the first substrate 100. The second extension 920 covers a portion of the lower surface of the first substrate 100. The second extension 920 is in close contact with the portion of the lower surface of the first substrate 100. The second extension 920 is attached to the portion of the lower surface of the first substrate 100.

A thickness T2 of the second extension 920 may be about 10 *µ*m to about 1000 *µ*m. The thickness T2 of the second extension 920 may be about 50 *µ*m to about 500 *µ*m. The thickness T2 of the second extension 920 may be about 50 *µ*m to about 300 *µ*m.

In addition, a width W2 of the second extension 920 may be about 1 mm to about 20 mm. The width W2 of the second extension 920 may be about 3 mm to about 10 mm.

Since the second extension 920 has the thickness and width described above, the electrochromic element according to another embodiment may effectively protect the electrolyte layer 700, the first color-changing layer 500, the second color-changing layer 600 and the first transparent electrode 300.

In addition, the second seal part 900 may further include a second flattening part 930.

The second flattening part 930 has a step difference from the lower surface of the first substrate 100. The second flattening part 930 may extend in a direction corresponding to a direction in which the lower surface of the first substrate 100 extends. That is, the second flattening part 930 may have a step difference from the lower surface of the first substrate 100 while being substantially parallel to the lower surface of the first substrate 100.

Since the second seal part 900 has the second flattening part 930, a lower surface of the second seal part 900 may be flat overall. Accordingly, the electrochromic element according to another embodiment may minimize a thickness deviation in edge portions. Accordingly, the electrochromic element according to another embodiment may minimize defects due to a thickness deviation.

The first seal part 800 and/or the second seal part 900 includes a curable resin. The second seal part 900 may include a heat-curable resin and/or a photocurable resin.

Examples of the heat-curable resin include epoxy resin, melamine resin, urea resin, unsaturated polyester resin, and the like. In addition, examples of the epoxy resin include phenol novolac-type epoxy resin, cresol novolac-type epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-bisphenol A-type epoxy resin, bisphenol S-type epoxy resin, hydrogenated bisphenol A-type epoxy resin, propylene oxide-added bisphenol A-type epoxy resin, biphenyl-type epoxy resin, naphthalene-type epoxy resin, resorcinol-type epoxy resin, glycidyl amines, and the like.

In addition, the first seal part 800 and/or the second seal part 900 may further include a heat-curable agent. Example of the heat-curable agent 1 includes hydrazide compounds such as 3-bis[hydrazinocarbonoethyl 5-isopropyl hydantoin] and adipic acid dihydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, adducts of various amines and epoxy resins; and the like.

The first seal part 800 and/or the second seal part 900 may include a photocurable resin. Examples of the photocurable resin include acrylate-based resins such as urethane acrylate, and the like. In addition, the first seal part 800 and/or the second seal part 900 may further include a photocuable initiator. The photocuable initiator may be at least one selected from the group consisting of an acetophenone-based compound, a benzophenone-based compound, a thioxanthone-based compound, a benzoin-based compound, a triazine-based compound or an oxime-based compound.

In addition, the first seal part 800 and/or the second seal part 900 may further include a moisture absorbent such as zeolite and/or silica.

In addition, the first seal part 800 and/or the second seal part 900 may further include an inorganic filler. The inorganic filler may be a material having high insulation, transparency and durability. Examples of the inorganic filler include silicon, aluminum, zirconia, a mixture thereof, and the like.

Referring to FIG. 5, the electrochromic element according to another embodiment may further include a first bus bar 1010 and a second bus bar 1020.

The first bus bar 1010 is disposed on the first transparent electrode 300. The first bus bar 1010 may be disposed in the first open region OA1. The first bus bar 1010 is connected to the first transparent electrode 300. The first bus bar 1010 may be disposed on an open top surface, formed by the first open region OA1, of the first transparent electrode 300.

The first bus bar 1010 may be electrically connected to the first transparent electrode 300. The first bus bar 1010 may be brought into direct contact with the top surface of the first transparent electrode 300. The first bus bar 1010 may be connected to the first transparent electrode 300 through solder

The first bus bar 1010 may extend a direction in which the first open region OA1 extends. That is, the first bus bar 1010 may extend along an edge region of the first transparent electrode 300.

The first seal part 800 may cover the first bus bar 1010. The first seal part may cover top and side surfaces of the first bus bar 1010. The first seal part 800 may protect the first bus bar 1010.

Since the first seal part 800 effectively protects the first bus bar 1010, the first bus bar 1010 may be prevented from being damaged by external impact or disconnected from the first transparent electrode 300.

The second bus bar 1020 is disposed under the second transparent electrode 400. The second bus bar 1020 may be disposed in the second open region OA2. The second bus bar 1020 is connected to the second transparent electrode 400. The second bus bar 1020 may be disposed on a lower surface, opened by the second open region OA2, of the second transparent electrode 400.

The second bus bar 1020 may be electrically connected to the second transparent electrode 400. The second bus bar 1020 may be brought into direct contact with a lower surface of the second transparent electrode 400. The second bus bar 1020 may be connected to the second transparent electrode 400 through solder.

The second bus bar 1020 may extend in a direction in which the second open region OA2 extends. That is, the second bus bar 1020 may extend along an edge region of the second transparent electrode 400. In addition, the first bus bar 1010 and the second bus bar 1020 may extend parallel to each other.

The second seal part 900 may cover the second bus bar 1020. The second seal part may cover lower and side surfaces of the second bus bar 1020. The second seal part 900 may protect the second bus bar 1020.

Since the second seal part 900 effectively protects the second bus bar 1020, the second bus bar 1020 may be prevented from being damaged by external impact or disconnected from the second transparent electrode 400.

The first bus bar 1010 and/or the second bus bar 1020 may include a metal. The first bus bar 1010 and/or the second bus bar 1020 may include a metal ribbon. The first bus bar 1010 and/or the second bus bar 1020 may include a conductive paste. The first bus bar 1010 and/or the second bus bar 1020 may include a binder and a conductive filler.

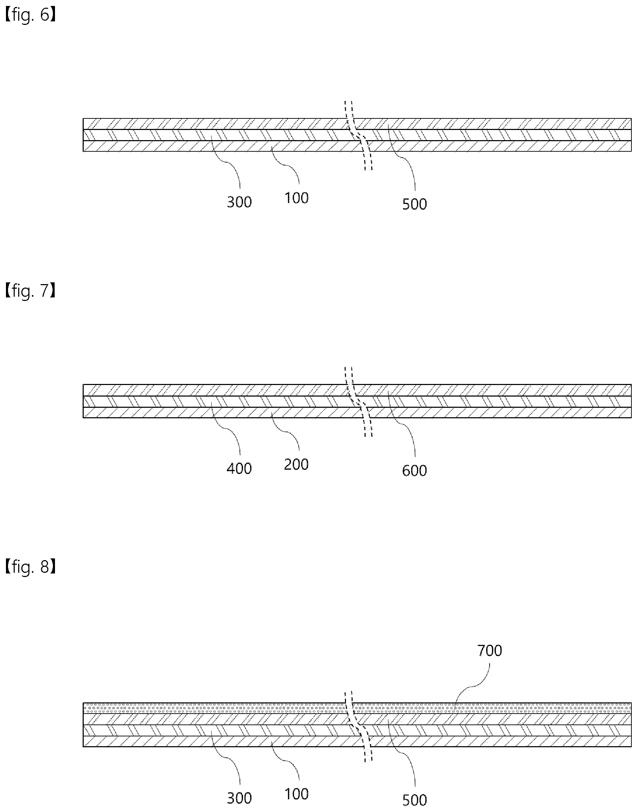

The electrochromic element according to another embodiment may be fabricated by the following method. FIGS. 6 to 13 are sectional views illustrating a process of fabricating the electrochromic element according to another embodiment.

Referring to FIG. 6, the first transparent electrode 300 is formed on the first substrate 100. The first transparent electrode 300 may be formed by a vacuum deposition process. A metal oxide such as indium tin oxide is deposited on the first substrate 100 by a sputtering process, etc., thereby forming the first transparent electrode 300.

The first transparent electrode 300 may be formed by a coating process. The first substrate 100 may be coated with metal nanowires and a binder together, so that the first transparent electrode 300 may be formed. The first substrate 100 may be coated with a conductive polymer, so that the first transparent electrode 300 may be formed.

In addition, the first transparent electrode 300 may be formed by a patterning process. A metal layer may be formed on the first substrate 100 by a sputtering process, etc., and the metal layer may be patterned to form the first transparent electrode 300 containing a metal mesh on the first substrate 100.

Next, the first color-changing layer 500 is formed on the first transparent electrode 300. The first color-changing layer 500 may be formed by a sol-gel coating process. A first sol solution including a first electrochromic material, a binder and a solvent may be coated on the first transparent electrode 300. A sol-gel reaction occurs in the coated first sol solution, and the first color-changing layer 500 may be formed.

The first sol solution may include the first electrochromic material in a content of about 5 wt% to about 30 wt% in the form of particles. The first sol solution may include the binder in a content of about 5 wt% to about 30 wt%. The first sol solution may include the solvent in a content of about 60 wt% to about 90 wt%.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

The binder may be the inorganic binder as described above.

Referring to FIG. 7, the second transparent electrode 400 is formed on the second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. The second substrate 200 may be coated with metal nanowires and a binder together, so that the second transparent electrode 400 may be formed. A conductive polymer may be coated on the second substrate 200, so that the second transparent electrode 400 may be formed.

In addition, the second transparent electrode 400 may be formed by a patterning process. A metal layer may be formed on the second substrate 200 by a sputtering process, etc., and the metal layer is patterned so that the second transparent electrode 400 containing a metal mesh may be formed on the second substrate 200.

Next, the second color-changing layer 600 is formed on the second transparent electrode 400. The second color-changing layer 600 may be formed by a sol-gel coating process. A second sol solution containing a second electrochromic material, a binder and a solvent may be coated on the second transparent electrode 400. A sol-gel reaction may occur in the coated second sol solution, and the second color-changing layer 600 may be formed.

The second sol solution may include the second electrochromic material in a content of about 5 wt% to about 30 wt% in the form of particles. The second sol solution may include the binder in a content of about 5 wt% to about 30 wt%. The second sol solution may include the solvent in a content of about 60 wt% to about 90 wt%.

The second sol solution may additionally include a dispersant.

Referring to FIG. 8, an electrolyte composition for forming the electrolyte layer 700 is formed on the first color-changing layer 500.

The electrolyte composition may include a metal salt, an electrolyte, a photocuable resin and a photocuable initiator. The photocuable resin may be at least one selected from the group consisting of hexandiol diacrylate (HDDA), tripropylene glycoldiacrylate (TPGDA), ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA) and dipentaerythritol hexaacrylate (DPHA).

The metal salt, the electrolyte and the photocuable initiator may be the same as described above.

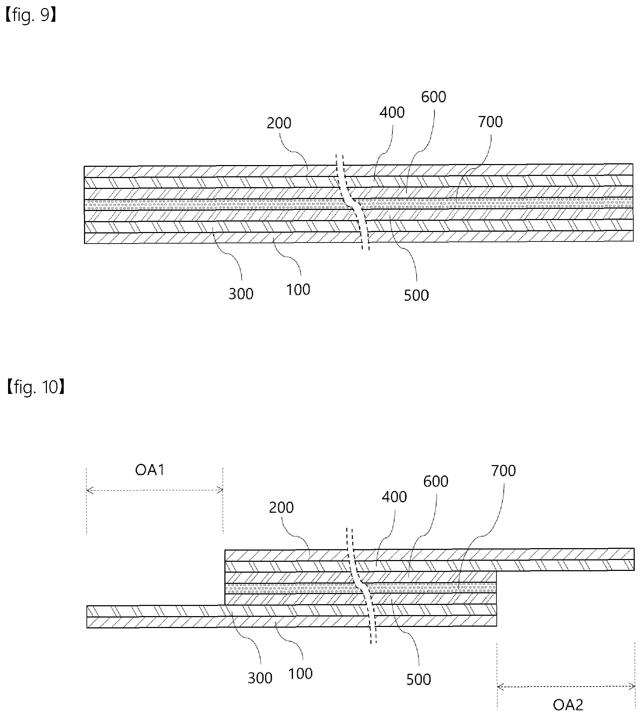

Referring to FIG. 9, the second substrate 200, the second transparent electrode 400 and the second color-changing layer 600 are deposited on the coated electrolyte composition. Here, the second color-changing layer 600 is brought into direct contact with the coated electrolyte composition.

Next, the coated electrolyte composition may be cured by light, and a first laminate including the first substrate 100, the first transparent electrode 300 and the first color-changing layer 500 and a second laminate including the second substrate 200, the second transparent electrode 400 and the second color-changing layer 600 are laminated to each other. That is, the first laminate and the second laminate may be adhered to each other by the electrolyte layer 700.

Referring to FIG. 10, a first open region OA1 is formed by removing portions of the first color-changing layer 500, the electrolyte layer 700, the second color-changing layer 600, the second transparent electrode 400 and the second substrate 200. The first open region OA1 exposes a portion of a top surface of the first transparent electrode 300.

In addition, the second open region OA2 is formed by removing portions of the first substrate 100, the first transparent electrode 300, the first color-changing layer 500, the electrolyte layer 700 and the second color-changing layer 600. The second open region OA2 exposes a portion of a lower surface of the second transparent electrode 400.

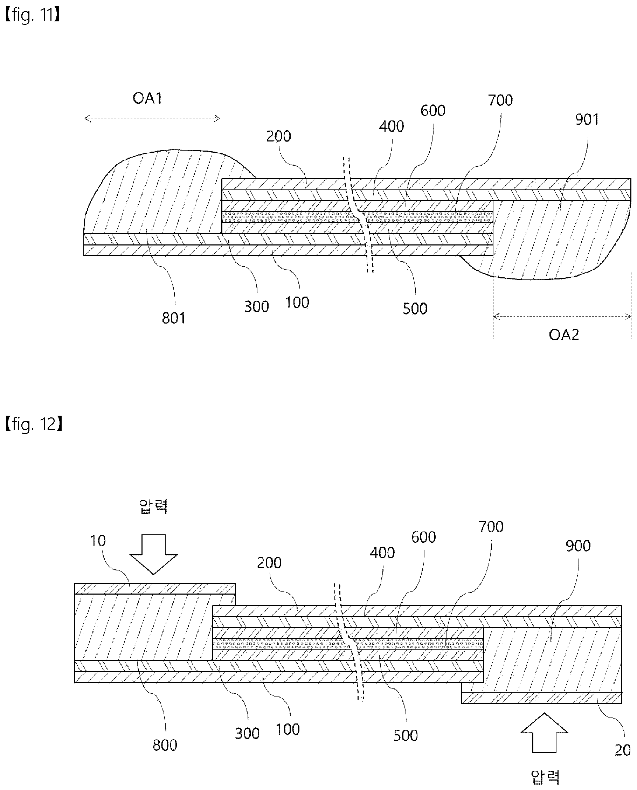

Referring to FIG. 11, a first curable resin composition 801 is disposed in the first open region OA1. The first curable resin composition 801 may be continuously arranged from the top surface of the first transparent electrode 300 to the portion of the top surface of the second substrate 200. That is, the first curable resin composition 801 may cover one side surface of the first color-changing layer 500, one side surface of the electrolyte layer 700, one side surface of the second color-changing layer 600, one side surface of the second transparent electrode 400 and one side surface of the second substrate 200.

A second curable resin composition 901 is disposed in the second open region OA2. The second curable resin composition 901 may be continuously disposed from the lower surface of the second transparent electrode 400 to the portion of the lower surface of the first substrate 100. That is, the second curable resin composition 901 may cover the other side surface of the first substrate 100, the other side surface of the first color-changing layer 500, the other side surface of the electrolyte layer 700, and the other side surface of the second color-changing layer 600.

Referring to FIG. 12, the first flattening member 10 is disposed on the first curable resin composition 801, and a predetermined pressure is applied to the first curable resin composition 801 by a first flattening member 10.

Next, the first curable resin composition 801 is cured, and the first flattening member 10 is removed. Accordingly, the first seal part 800 is formed. The first flattening member 10 may be a film including a silicone release layer.

A second flattening member 20 is disposed under the second curable resin composition 901, and a predetermined pressure is applied to the second curable resin composition 901 by the second flattening member 20. The second flattening member 20 may be a film including a silicone release layer.

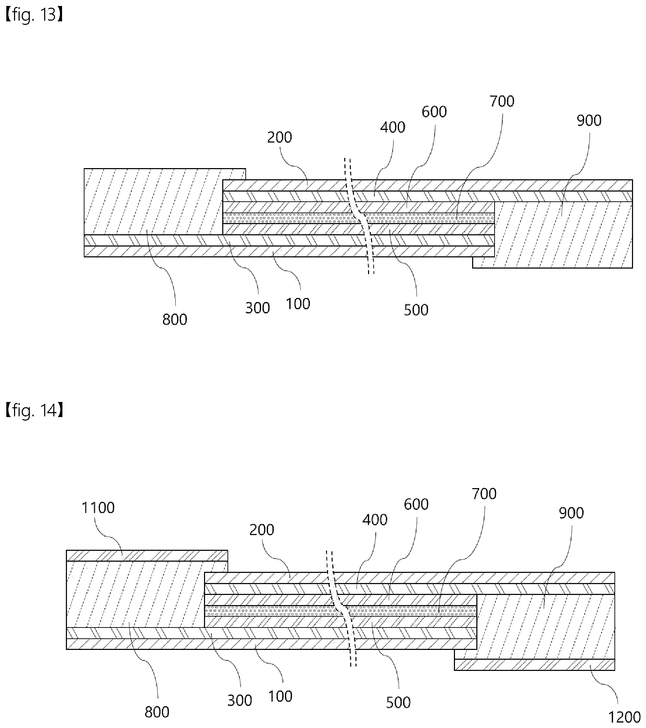

Referring to FIG. 13, the first curable resin composition 201 is cured, and the first flattening member 10 is removed. Accordingly, the first seal part 800 is formed. In addition, the second curable resin composition 901 is cured, and the second flattening member 20 is removed. Accordingly, the second seal part 900 is formed.

The first curable resin composition 801 and the second curable resin composition 901 may be simultaneously or sequentially cured. That is, the first curable resin composition 801 and the second curable resin composition 901 may be simultaneously applied and flattened, so that the first seal part 800 and the second seal part 900 may be simultaneously formed. Alternatively, the first curable resin composition 801 may be applied and cured, and then the first seal part 800 may be formed, and then the second curable resin composition may be applied and cured, so that the second seal part 900 may be formed.

Accordingly, the electrochromic element according to another embodiment may be fabricated.

FIG. 14 illustrates a sectional view of an electrochromic element according to another embodiment.

The above description of the preceding embodiment may be referred to when describing the electrochromic element according to this embodiment, except for changed parts.

Referring to FIG. 14, the electrochromic element according to another embodiment may further include a first barrier layer 1100 and a second barrier layer 1200.

The first barrier layer 1100 is disposed on the first seal part 800. The first barrier layer 1100 is disposed on a first flat part. The first barrier layer 1100 may be in close contact with the first seal part 800. The first barrier layer 1100 may be attached to the first seal part 800.

The first barrier layer 1100 may protect the first seal part 800 from external physical impact.

The first barrier layer 1100 may protect the first transparent electrode 300, the first color-changing layer 500, the electrolyte layer 700, the second color-changing layer 600 and the second transparent electrode 400 from external moisture and/or oxygen. That is, the first barrier layer 1100 may reinforce the sealing characteristics of the first seal part 800.

The first barrier layer 1100 may include a base film. The base film may include a polyester film, a polyethylene film, a polypropylene film, a polyimide film or a polyamide film. In addition, the first barrier layer 1100 may further include an organic film and inorganic film alternately arranged on the base film.

The second barrier layer 1200 is disposed under the second seal part 900. The second barrier layer 1200 is disposed under a second flat part. The second barrier layer 1200 may be disposed under the second flat part to be in close contact therewith. The second barrier layer 1200 may be disposed under the second flat part to be attached thereto.

The second barrier layer 1200 may protect the second seal part 900 from external physical impact.

The second barrier layer 1200 may protect the second transparent electrode 400, the second color-changing layer 600, the electrolyte layer 700, the first color-changing layer 500 and the first transparent electrode 300 from external moisture and/or oxygen. That is, the second barrier layer 1200 may reinforce the sealing characteristics of the second seal part 900.

The second barrier layer 1200 may include a base film. The base film may include a polyester film, a polyethylene film, a polypropylene film, a polyimide film or a polyamide film. In addition, the second barrier layer 1200 may further include an organic film and inorganic film alternately arranged on the base film.

The first barrier layer 1100 and the second barrier layer 1200 may have a moisture permeability of about 1×10 g/m²·day or less. The first barrier layer 1100 and the second barrier layer 1200 may have a moisture permeability of about 5 g/m²·day or less. The first barrier layer 1100 and the second barrier layer 1200 may have a moisture permeability of about 5×10 -1g/m²·day or less. The first barrier layer 1100 and the second barrier layer 1200 may have a moisture permeability of about 1×10 -1g/m²·day or less.

In a process of forming the first seal part 800 and the second seal part 900, the first barrier layer 1100 and the second barrier layer 1200 may be attached to the first seal part 800 and the second seal part 900. That is, the first barrier layer 1100 may be brought into close contact with the first seal part 800 in a process of curing the first curable resin. In addition, the second barrier layer 1200 may be brought into close contact with the second seal part 900 in a process of curing the second curable resin.

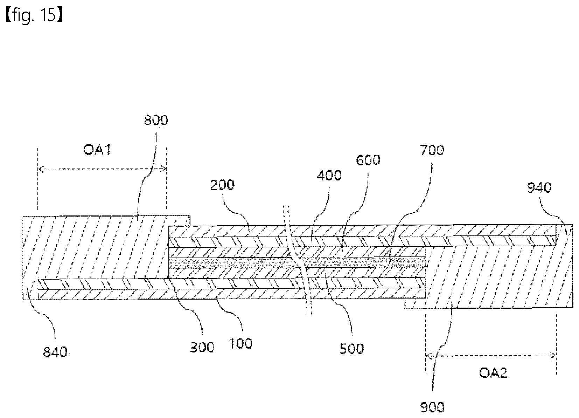

FIG. 15 illustrates a sectional view of an electrochromic element according to the claims.

The descriptions of the preceding embodiments can be combined with the description of this embodiment, except for changed parts.

Referring to FIG. 15, the first seal part 800 further includes a first edge 840. The first edge 840 extends from the first body 810, and covers a first side surface of the first substrate 100 and a seventh side surface of the first transparent electrode 300.

That is, in a process in which the first curable resin composition 801 is flattened, the first curable resin composition 801 may flow to the first side surface 101 and may be cured, so that the first edge 840 may be formed.

The second seal part 900 further includes a second edge 940. The second edge 940 extends from the second body 910 and covers the fourth side surface 202 of the second substrate 200 and the eighth side surface of the second transparent electrode 400.

That is, in a process in which the second curable resin composition 901 is flattened, the second curable resin composition 901 may flow to the fourth side surface 202 and may be cured, so that the second edge 940 may be formed.

Since the first seal part 800 includes the first edge 840, and the second seal part 900 includes the second edge 940, the first seal part 800 and the second seal part 900 may effectively protect the first transparent electrode 300, the first color-changing layer 500, the electrolyte layer 700, the second color-changing layer 600 and the second transparent electrode 400.

In addition, since the first seal part 800 and the second seal part 900 respectively cover the first side surface 101 and the fourth side surface 202, the mechanical strength of the edge portions of the electrochromic element according to another embodiment may be further reinforced.

The electrochromic element according to another embodiment includes the first seal part 800 disposed in the first open region OA1 from which the second substrate 200, the second transparent electrode 400 and the electrolyte layer 700 have been removed and the top surface of the first transparent electrode 300 is open.

Accordingly, the first seal part 800 may be attached to the top surface of the first transparent electrode 300 while being disposed on the third side surface 201 of the second substrate 200, the side surface of the second transparent electrode 400, the side surface of the second color-changing layer 600, the side surface of the electrolyte layer 700 and the side surface of the first color-changing layer 500. In addition, the first seal part 800 may be attached to the third side surface 201 of the second substrate 200, the side surface of the second transparent electrode 400, the side surface of the second color-changing layer 600, the side surface of the electrolyte layer 700 and the side surface of the first color-changing layer 500. In addition, the first seal part 800 may also be attached to the portion of the top surface of the second substrate 200.

Accordingly, the first seal part 800 may be disposed over a wide area and may be attached to the wide area. Accordingly, the first seal part 800 may be firmly attached to the top surface of the first transparent electrode 300, the third side surface 201 of the second substrate 200, the side surface of the second transparent electrode 400, the side surface of the second color-changing layer 600, the side surface of the electrolyte layer 700, the side surface of the first color-changing layer 500 and the portion of the top surface of the second substrate 200. In addition, the first seal part 800 may be firmly brought into close contact with the top surface of the first transparent electrode 300, the third side surface 201 of the second substrate 200, the side surface of the second transparent electrode 400, the side surface of the second color-changing layer 600, the side surface of the electrolyte layer 700, the side surface of the first color-changing layer 500 and the portion of the top surface of the second substrate 200.

Accordingly, the first seal part 800 may efficiently suppress oxygen and moisture penetrating from the side.

Similarly, the second seal part 900 may be disposed in the second open region OA2 from which the first substrate 100, the first transparent electrode 300 and the electrolyte layer 700 have been removed and the lower surface of the second transparent electrode 400 is open.

In addition, the second seal part 900 may be attached to the second side surface 102 of the first substrate 100, the side surface of the first transparent electrode 300, the side surface of the first color-changing layer 500, the side surface of the electrolyte layer 700 and the side surface of the second color-changing layer 600. In addition, the second seal part 900 may also be attached to the portion of the lower surface of the first substrate 100.

Accordingly, the second seal part 900 may efficiently suppress oxygen and moisture penetrating from the side.

Accordingly, the electrochromic element according to another embodiment may block the inflow of oxygen and moisture from the outside, and may effectively protect the first color-changing layer 500, the electrolyte layer 700 and the second color-changing layer 600.

In addition, the first substrate 100 and the second substrate 200 may be flexible, and the electrochromic element according to another embodiment may be bent. Here, since the first seal part 800 and the second seal part 900 are strongly adhered to each side, the electrochromic element according to another embodiment may prevent the first seal part 800 and the second seal part 900 from being peeled off or gapped.

The electrochromic element according to another embodiment may have improved durability.

In addition, the features, structures, effects, and the like described in the embodiments are included in at least one embodiment of the present invention, and are not necessarily limited to only one embodiment. Furthermore, the features, structures, effects and the like illustrated in the embodiments can be combined and modified by those skilled in the art to which the embodiments belong. Therefore, it should be understood that the combined and modified embodiments are included in the present invention.

Although the above description focuses on embodiments, these are only examples and do not limit the present invention, and those with ordinary knowledge in the field to which the present invention pertains will be able to recognize that various modifications and applications not exemplified above are possible without departing from the essential characteristics of the present invention. For example, each component specifically shown in the embodiments can be modified and implemented, and the differences related to such modifications and applications should be interpreted as being included in the scope of the present invention defined in the appended claims.

### [Industrial Applicability]

Embodiments can be used in the field of smart windows.

## Claims

1. An electrochromic element, comprising:
a first substrate (100);
a first transparent electrode (300) disposed on the first substrate (100);
a first color-changing layer (500) disposed on the first transparent electrode (300);
an electrolyte layer (700) disposed on the first color-changing layer (500);
a second color-changing layer (600) disposed on the electrolyte layer (700);
a second transparent electrode (400) disposed on the second color-changing layer (600);
a second substrate (200) disposed on the second transparent electrode (400); and
a first seal part (800) disposed in a first open region (OA1) between a third side surface (201) of the second substrate (200) and a first side surface (101) of the first substrate (100) and configured to cover portions of a top surface of the first transparent electrode (300), a fifth side surface (701) of the electrolyte layer (700), a third side surface (201) of the second substrate (200) and a top surface of the second substrate (200),
**characterised in that**
the first seal part (800) comprises a first edge (840) covering the first side surface (101) of the first substrate (100) and a seventh side surface (301) of the first transparent electrode (300).

2. The electrochromic element according to claim 1, wherein the first seal part (800) further comprises a first flattening part (830).

3. The electrochromic element according to claim 2, wherein the first seal part (800) comprises a first body (810) disposed in the first open region (OA1); and a first extension (820) extending from the first body (810) to the top surface of the second substrate.

4. The electrochromic element according to claim 1, wherein the first substrate (100) comprises a second side surface (102) facing the first side surface (101),
the second substrate (200) comprises a fourth side surface (202) facing the third side surface (201),
a second open region (OA2) is formed between the second side surface (102) and the fourth side surface (202), and
a second seal part (900) disposed in the second open region (OA2) and configured to cover portions of a lower surface of the second transparent electrode (400), a sixth side surface (702) of the electrolyte layer, the second side surface (102) and a lower surface of the first substrate (100) is further comprised.

5. The electrochromic element according to claim 4, wherein the second seal part (900) further comprises a second flattening part (930).

6. The electrochromic element according to claim 5, wherein the second seal part (900) comprises a second body (910) disposed in the second open region (OA2); and a second extension (920) extending from the second body (910) to a lower surface of the first substrate (100).

7. The electrochromic element according to claim 2, further comprising a first barrier layer (1100) disposed on the first flattening part (830).

8. The electrochromic element according to claim 5, further comprising a second barrier (1200) layer disposed under the second flattening part (930).

9. The electrochromic element according to claim 1, further comprising a first bus bar (1010) connected electrically to the first transparent electrode (300),
wherein the first seal part (800) covers the first bus bar (1010).

10. The electrochromic element according to claim 4, further comprising a second bus bar (1020) electrically connected to the second transparent electrode (400),
wherein the second seal part (900) covers the second bus bar (1020).

11. A method of fabricating an electrochromic element, the method comprising:
forming a first transparent electrode (300) on a first substrate (100);
forming a first color-changing layer (500) on the first transparent electrode (300);
forming an electrolyte layer (700) on the first color-changing layer (500);
forming a second transparent electrode (400) on a second substrate (200);
forming a second color-changing layer (600) on the second transparent electrode (400);
disposing the second color-changing layer (600) on the electrolyte layer (700) and bonding the second substrate (200), the second transparent electrode (400) and the second color-changing layer (600) to the electrolyte layer (700);
removing a portion of the second substrate (200), a portion of the second transparent electrode (400), a portion of the second color-changing layer (600), a portion of the electrolyte layer (700) and a portion of the first color-changing layer (500) to form a first open region (OA1);
disposing a first curable resin composition (801) in the first open region (OA1);
flattening the first curable resin composition (801); and
forming a first seal part (800) by curing the first curable resin composition (801),
**characterised in that**
the first seal part (800) comprises a first edge (840) covering a first side surface (101) of the first substrate (100) and a seventh side surface (301) of the first transparent electrode (300).

12. The method according to claim 11, further comprising:
removing a portion of the first substrate (100), a portion of the first transparent electrode (300), a portion of the first color-changing layer (500), a portion of the electrolyte layer (700) and a portion of the second color-changing layer (600) to form a second open region (OA2);
disposing a second curable resin composition (901) in the second open region (OA2);
flattening the second curable resin composition (901); and
curing the second curable resin composition (901).

## Patentansprüche

1. Elektrochromes Element, umfassend:
ein erstes Substrat (100);
eine erste transparente Elektrode (300), die auf dem ersten Substrat (100) angeordnet ist;
eine erste Farbänderungsschicht (500), die auf der ersten transparenten Elektrode (300) angeordnet ist;
eine Elektrolytschicht (700), die auf der ersten Farbänderungsschicht (500) angeordnet ist;
eine zweite Farbänderungsschicht (600), die auf der Elektrolytschicht (700) angeordnet ist;
eine zweite transparente Elektrode (400), die auf der zweiten Farbänderungsschicht (600) angeordnet ist;
ein zweites Substrat (200), das auf der zweiten transparenten Elektrode (400) angeordnet ist; und
einen ersten Dichtungsteil (800), der in einer ersten offenen Region (OA1) zwischen einer dritten Seitenfläche (201) des zweiten Substrats (200) und einer ersten Seitenfläche (101) des ersten Substrats (100) angeordnet ist und dazu eingerichtet ist, Abschnitte einer Oberseite der ersten transparenten Elektrode (300), einer fünften Seitenfläche (701) der Elektrolytschicht (700), einer dritten Seitenfläche (201) des zweiten Substrats (200) und einer Oberseite des zweiten Substrats (200) zu bedecken,
**dadurch gekennzeichnet, dass**
der erste Dichtungsteil (800) einen ersten Rand (840) umfasst, der die erste Seitenfläche (101) des ersten Substrats (100) und eine siebte Seitenfläche (301) der ersten transparenten Elektrode (300) bedeckt.

2. Elektrochromes Element nach Anspruch 1, wobei der erste Dichtungsteil (800) des Weiteren einen ersten Abflachungsteil (830) umfasst.

3. Elektrochromes Element nach Anspruch 2, wobei der erste Dichtungsteil (800) einen ersten Körper (810), der in der ersten offenen Region (OA1) angeordnet ist; und eine erste Verlängerung (820), die sich von dem ersten Körper (810) zu der Oberseite des zweiten Substrats erstreckt, umfasst.

4. Elektrochromes Element nach Anspruch 1, wobei das erste Substrat (100) eine zweite Seitenfläche (102) umfasst, die der ersten Seitenfläche (101) zugewandt ist,
das zweite Substrat (200) eine vierte Seitenfläche (202) umfasst, die der dritten Seitenfläche (201) zugewandt ist,
zwischen der zweiten Seitenfläche (102) und der vierten Seitenfläche (202) eine zweite offene Region (OA2) gebildet ist, und
des Weiteren ein zweiter Dichtungsteil (900) vorhanden ist, der in der zweiten offenen Region (OA2) angeordnet ist und dazu eingerichtet ist, Abschnitte einer Unterseite der zweiten transparenten Elektrode (400), einer sechsten Seitenfläche (702) der Elektrolytschicht, der zweiten Seitenfläche (102) und einer Unterseite des ersten Substrats (100) zu bedecken.

5. Elektrochromes Element nach Anspruch 4, wobei der zweite Dichtungsteil (900) des Weiteren einen zweiten Abflachungsteil (930) umfasst.

6. Elektrochromes Element nach Anspruch 5, wobei der zweite Dichtungsteil (900) einen zweiten Körper (910), der in der zweiten offenen Region (OA2) angeordnet ist; und eine zweite Verlängerung (920), die sich von dem zweiten Körper (910) zu einer Unterseite des ersten Substrats (100) erstreckt, umfasst.

7. Elektrochromes Element nach Anspruch 2, des Weiteren umfassend eine erste Sperrschicht (1100), die auf dem ersten Abflachungsteil (830) angeordnet ist.

8. Elektrochromes Element nach Anspruch 5, des Weiteren umfassend eine zweite Sperrschicht (1200), die unter dem zweiten Abflachungsteil (930) angeordnet ist.

9. Elektrochromes Element nach Anspruch 1, des Weiteren umfassend eine erste Sammelschiene (1010), die elektrisch mit der ersten transparenten Elektrode (300) verbunden ist,
wobei der erste Dichtungsteil (800) die erste Sammelschiene (1010) bedeckt.

10. Elektrochromes Element nach Anspruch 4, des Weiteren umfassend eine zweite Sammelschiene (1020), die elektrisch mit der zweiten transparenten Elektrode (400) verbunden ist, wobei der zweite Dichtungsteil (900) die zweite Sammelschiene (1020) bedeckt.

11. Verfahren zum Fertigen eines elektrochromen Elements, wobei das Verfahren umfasst:
Bilden einer ersten transparenten Elektrode (300) auf einem ersten Substrat (100);
Bilden einer ersten Farbänderungsschicht (500) auf der ersten transparenten Elektrode (300);
Bilden einer Elektrolytschicht (700) auf der ersten Farbänderungsschicht (500);
Bilden einer zweiten transparenten Elektrode (400) auf einem zweiten Substrat (200);
Bilden einer zweiten Farbänderungsschicht (600) auf der zweiten transparenten Elektrode (400);
Anordnen der zweiten Farbänderungsschicht (600) auf der Elektrolytschicht (700) und Bonden des zweiten Substrats (200), der zweiten transparenten Elektrode (400) und der zweiten Farbänderungsschicht (600) an die Elektrolytschicht (700);
Entfernen eines Abschnitts des zweiten Substrats (200), eines Abschnitts der zweiten transparenten Elektrode (400), eines Abschnitts der zweiten Farbänderungsschicht (600), eines Abschnitts der Elektrolytschicht (700) und eines Abschnitts der ersten Farbänderungsschicht (500), um eine erste offene Region (OA1) zu bilden;
Anordnen einer ersten aushärtbaren Harzzusammensetzung (801) in der ersten offenen Region (OA1);
Abflachen der ersten aushärtbaren Harzzusammensetzung (801); und
Bilden eines ersten Dichtungsteils (800) durch Aushärten der ersten aushärtbaren Harzzusammensetzung (801),
**dadurch gekennzeichnet, dass**
der erste Dichtungsteil (800) einen ersten Rand (840) umfasst, der eine erste Seitenfläche (101) des ersten Substrats (100) und eine siebte Seitenfläche (301) der ersten transparenten Elektrode (300) bedeckt.

12. Verfahren nach Anspruch 11, des Weiteren umfassend:
Entfernen eines Abschnitts des ersten Substrats (100), eines Abschnitts der ersten transparenten Elektrode (300), eines Abschnitts der ersten Farbänderungsschicht (500), eines Abschnitts der Elektrolytschicht (700) und eines Abschnitts der zweiten Farbänderungsschicht (600), um eine zweite offene Region (OA2) zu bilden;
Anordnen einer zweiten aushärtbaren Harzzusammensetzung (901) in der zweiten offenen Region (OA2);
Abflachen der zweiten aushärtbaren Harzzusammensetzung (901); und
Aushärten der zweiten aushärtbaren Harzzusammensetzung (901).

## Revendications

1. Élément électrochrome, comprenant :
un premier substrat (100) ;
une première électrode transparente (300) disposée sur le premier substrat (100) ;
une première couche à changement de couleur (500) disposée sur la première électrode transparente (300) ;
une couche d'électrolyte (700) disposée sur la première couche à changement de couleur (500) ;
une deuxième couche à changement de couleur (600) disposée sur la couche d'électrolyte (700) ;
une deuxième électrode transparente (400) disposée sur la deuxième couche à changement de couleur (600) ;
un deuxième substrat (200) disposé sur la deuxième électrode transparente (400) ; et
une première partie d'étanchéité (800) disposée dans une première région ouverte (OA1) entre une troisième surface latérale (201) du deuxième substrat (200) et une première surface latérale (101) du premier substrat (100), et configurée pour recouvrir des parties d'une surface supérieure de la première électrode transparente (300), d'une cinquième surface latérale (701) de la couche d'électrolyte (700), d'une troisième surface latérale (201) du deuxième substrat (200) et d'une surface supérieure du deuxième substrat (200),
**caractérisé en ce que**
la première partie d'étanchéité (800) comprend un premier bord (840) recouvrant la première surface latérale (101) du premier substrat (100) et une septième surface latérale (301) de la première électrode transparente (300).

2. Élément électrochrome selon la revendication 1, dans lequel la première partie d'étanchéité (800) comprend en outre une première partie d'aplatissement (830).

3. Élément électrochrome selon la revendication 2, dans lequel la première partie d'étanchéité (800) comprend un premier corps (810) disposé dans la première région ouverte (OA1) ; et un premier prolongement (820) s'étendant depuis le premier corps (810) jusqu'à la surface supérieure du deuxième substrat.

4. Élément électrochrome selon la revendication 1, dans lequel le premier substrat (100) comprend une deuxième surface latérale (102) faisant face à la première surface latérale (101),
le deuxième substrat (200) comprend une quatrième surface latérale (202) faisant face à la troisième surface latérale (201),
une deuxième région ouverte (OA2) est formée entre la deuxième surface latérale (102) et la quatrième surface latérale (202), et
une deuxième partie d'étanchéité (900) disposée dans la deuxième région ouverte (OA2) et configurée pour recouvrir des parties d'une surface inférieure de la deuxième électrode transparente (400), d'une sixième surface latérale (702) de la couche d'électrolyte, de la deuxième surface latérale (102) et d'une surface inférieure du premier substrat (100) est en outre prévue.

5. Élément électrochrome selon la revendication 4, dans lequel la deuxième partie d'étanchéité (900) comprend en outre une deuxième partie d'aplatissement (930).

6. Élément électrochrome selon la revendication 5, dans lequel la deuxième partie d'étanchéité (900) comprend un deuxième corps (910) disposé dans la deuxième région ouverte (OA2) ; et un deuxième prolongement (920) s'étendant depuis le deuxième corps (910) jusqu'à une surface inférieure du premier substrat (100).

7. Élément électrochrome selon la revendication 2, comprenant en outre une première couche barrière (1100) disposée sur la première partie d'aplatissement (830).

8. Élément électrochrome selon la revendication 5, comprenant en outre une deuxième couche barrière (1200) disposée sous la deuxième partie d'aplatissement (930).

9. Élément électrochrome selon la revendication 1, comprenant en outre une première barre omnibus (1010) connectée électriquement à la première électrode transparente (300),
dans lequel la première partie d'étanchéité (800) recouvre la première barre omnibus (1010).

10. Élément électrochrome selon la revendication 4, comprenant en outre une deuxième barre omnibus (1020) connectée électriquement à la deuxième électrode transparente (400),
dans lequel la deuxième partie d'étanchéité (900) recouvre la deuxième barre omnibus (1020).

11. Procédé de fabrication d'un élément électrochrome, le procédé comprenant de :
former une première électrode transparente (300) sur un premier substrat (100) ;
former une première couche à changement de couleur (500) sur la première électrode transparente (300) ;
former une couche d'électrolyte (700) sur la première couche à changement de couleur (500) ;
former une deuxième électrode transparente (400) sur un deuxième substrat (200) ;
former une deuxième couche à changement de couleur (600) sur la deuxième électrode transparente (400) ;
disposer la deuxième couche à changement de couleur (600) sur la couche d'électrolyte (700) et lier le deuxième substrat (200), la deuxième électrode transparente (400) et la deuxième couche à changement de couleur (600) à la couche d'électrolyte (700) ;
retirer une partie du deuxième substrat (200), une partie de la deuxième électrode transparente (400), une partie de la deuxième couche à changement de couleur (600), une partie de la couche d'électrolyte (700) et une partie de la première couche à changement de couleur (500) pour former une première région ouverte (OA1) ;
disposer une première composition de résine durcissable (801) dans la première région ouverte (OA1) ;
aplatir la première composition de résine durcissable (801) ; et
former une première partie d'étanchéité (800) en durcissant la première composition de résine durcissable (801),
**caractérisé en ce que**
la première partie d'étanchéité (800) comprend un premier bord (840) recouvrant une première surface latérale (101) du premier substrat (100) et une septième surface latérale (301) de la première électrode transparente (300).

12. Procédé selon la revendication 11, comprenant en outre de :
retirer une partie du premier substrat (100), une partie de la première électrode transparente (300), une partie de la première couche à changement de couleur (500), une partie de la couche d'électrolyte (700) et une partie de la deuxième couche à changement de couleur (600) pour former une deuxième région ouverte (OA2) ;
disposer une deuxième composition de résine durcissable (901) dans la deuxième région ouverte (OA2) ;
aplatir la deuxième composition de résine durcissable (901) ; et
durcir la deuxième composition de résine durcissable (901).
